(19) **Europäisches Patentamt**

**European Patent Office**

**Office européen des brevets**

(11) **EP 1 619 486 A2**

(12) **EUROPEAN PATENT APPLICATION**

(43) Date of publication:
**25.01.2006 Bulletin 2006/04**

(51) Int Cl.:
*G01L 1/14* (2006.01)    *G01L 3/10* (2006.01)

(21) Application number: **05076509.8**

(22) Date of filing: **01.07.2005**

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK YU** | • **Smith, John R.**<br>  **Birmingham, MI 48009 (US)**<br>• **Morelli, Donald T.**<br>  **White Lake, MI 48383 (US)**<br>• **Lequesne, Bruno P.B.**<br>  **Troy, MI 48094 (US)**<br>• **van Steenkiste, Thomas H.**<br>  **Ray, MI 48096 (US)** |
| (30) Priority: **23.07.2004 US 898676** | |
| (71) Applicant: **Delphi Technologies, Inc.**<br>**Troy, MI 48007 (US)** | (74) Representative: **Denton, Michael John et al**<br>**Delphi European Headquarters,**<br>**64 avenue de la Plaine de France,**<br>**Paris Nord II,**<br>**B.P. 65059, Tremblay en France**<br>**95972 Roissy Charles de Gaulle Cedex (FR)** |
| (72) Inventors:<br>• **Nehl, Thomas W.**<br>  **Shelby Township, MI 48316 (US)** | |

(54) **Non-invasive magnetostrictive sensor**

(57) A magnetostrictive sensor (200) to sense force (212) or torque applied to a structural element (204) to which the magnetostrictive sensor is non-invasively attached by a fixed, intimate contact therewith. The sensor consists of a magnetostrictive layer (210) in intimate contact with a coil (206) excited source of magnetic flux. A force or torque applied to the structural element produces a stress transferred to the magnetostrictive layer, thereby varying the magnetic permeability of the magnetostrictive layer. The change in the magnetic flux (224) produces a change in the inductance and impedance of the coil, and thereby a detectable change in the voltage $V'_s$ across the coil.

**Description**

TECHNICAL FIELD

The present invention relates to magnetostriction-based force and torque sensors and, more particularly, to a non-invasive magnetostrictive sensor used to determine force and torque due to magnetostriction of magnetostrictive materials.

BACKGROUND OF THE INVENTION

Various materials are known in the art to be magnetostrictive by which their magnetic permeability varies with stress applied thereto, known as magnetostrictive materials. The physical effect is known as the "Villari" effect.

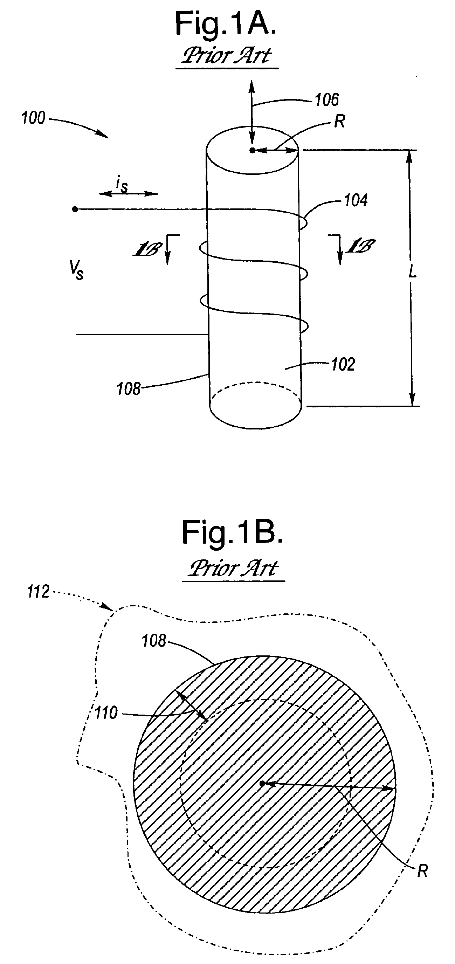

An example of a prior art method of determining the force acting upon a magnetostrictive material subjected to stress is depicted in Figure 1A. Magnetostrictive sensor 100 of Figure 1 A consists of magnetostrictive cylindrical rod 102 of radius R and length L wrapped with a coil 104 to which a time varying current is of a specified frequency is applied. Magnetostrictive sensor 100 is invasively embedded within a structural element 112 (shown in phantom in Figure 1B) to determine the force applied to the structural element. A force applied to the structural element imposes a stress and force 106 upon the invasively embedded magnetostrictive cylindrical rod 102, thereby varying the magnetic permeability of the magnetostrictive cylindrical rod. The varying magnetic permeability of the invasively embedded magnetostrictive cylindrical rod 102 produces a change in the inductance and impedance of magnetostrictive sensor 100, which can be captured as a change in the voltage $V_S$ across the coil 104. The stress or force 106 applied to the structural element and, thus, upon magnetostrictive sensor 100, can be determined by the produced change in inductance or impedance via the change in the voltage $V_s$ by techniques well known in the art.

Magnetostrictive materials, such as nickel and nickel-iron alloys, are typically conductive. Therefore, the frequency of the time varying current is, typically in the kHz range to enhance bandwidth and response, in conjunction with the conductivity of magnetostrictive cylindrical rod 102, results in eddy currents near the surface 108 of the magnetostrictive cylindrical rod by which the magnetic flux produced by the coil 104 is predominantly confined within the skin depth 110, depicted in Figure 1B, of the surface. Therefore, magnetostrictive sensor 100 only responds to stress and force 106 near the surface 108 of magnetostrictive cylindrical rod 102. Under planar conditions, the skin depth of a material, symbolized by $\delta$, is known to follow:

$$\delta = 1/\sqrt{(\pi f \mu \sigma)} = (\pi f \mu \sigma)^{-\frac{1}{2}}. \qquad (1)$$

The skin depth 110 of magnetostrictive cylindrical rod 102 in the example of Figures 1A and 1B is defined through equation (1) where f is the frequency of the time varying current $i_S$, $\mu$ is the magnetic permeability of the magnetostrictive cylindrical rod, and $\sigma$ is the conductivity of the magnetostrictive cylindrical rod. Equation 1 is exact for a planar geometry, and approximate, but sufficiently close for design purposes, for other geometries such as the cylindrical case shown in Figure 1. The skin depths of materials and the correlation of magnetic flux depth penetration to eddy currents and skin depth, are well known in the art.

What is needed is a simpler, cost effective method for determining force and torque acting upon structural elements utilizing magnetostrictive sensors which need not be invasively embedded within the structural element.

SUMMARY OF THE INVENTION

The present invention is a magnetostrictive sensor to sense force or torque (stress) applied to a structural element resulting in strain in the structural element to which the magnetostrictive sensor is non-invasively attached by an intimate contact with the structural element, whereby no air gap is present at the contact interface between the magnetostrictive sensor and the structural element.

The magnetostrictive sensor according to the present invention consists of, at least, a magnetostrictive layer, wherein the term "layer" is meant to include a "layer", in intimate contact with a source of magnetic flux, whereby no air gap or an air gap as small as possible is present at the contact interface between the magnetostrictive layer and the source of magnetic flux, and wherein the source of magnetic flux is constructed to effectively and efficiently guide the produced magnetic flux to the magnetostrictive layer in order to maximize the magnetostrictive sensor response to strain. The air gap between the source of magnetic flux and the magnetostrictive layer should be as small as possible and is therefore preferably of zero length (no air gap). However, it must be recognized that under some circumstances there must be a clearance between the two, as for instance when the structural element and the magnetostrictive layer attached thereto are moving or rotating, and the source of magnetic flux is stationary. In the latter case, the reluctance of this air gap must be minimized, by reducing the length of the gap, or increasing its cross-section, in ways known in the art.

The non-invasive, fixed, intimate contact attachment of the magnetostrictive layer to the structural element can be accomplished by using kinetic spray, magnetic pulse welding of a sheet of magnetostrictive material to the structural element, or other techniques well known in the art, whereby no air gap is present at the contact interface between the magnetostrictive sensor and the structural element. The source of magnetic flux is, preferably, a coil (or coils), to which a, preferably, sinusoidally alternating current is applied to produce a magnetic flux, mounted within a core, whereby the core has a magnetic permeability selected to guide the magnetic flux generated by the current carrying coil within the core to the magnetostrictive layer in order to maximize the magnetostrictive sensor response to strain, and whereby no air gap or an air gap as small as possible is present at the contact interface between the magnetostrictive layer and the source of magnetic flux.

A force or torque applied to the structural element to which the magnetostrictive sensor is attached produces a stress within the structural element which is transferred to the magnetostrictive layer of the magnetostrictive sensor due to its fixed, intimate contact with the structural element, thereby varying the magnetic permeability of the magnetostrictive layer. The varying magnetic permeability of the magnetostrictive layer produces a change in the magnetic flux, thereby producing a change in the inductance and impedance of the coil of the magnetostrictive sensor, and thereby producing a change in the voltage across the coil. The force or torque applied to the structural element and, thus, upon the magnetostrictive sensor can be determined by the produced change in inductance or impedance via the change in the voltage of the coil by techniques well known in the art.

The non-invasiveness of the proposed sensor can be further appreciated by considering that with the present invention, the structural element material can be chosen to a large degree independently of the magnetostrictive sensor. For instance, if large stress levels are expected, a material with high yield strength such as steel can be chosen for the structural element, and the magnetostrictive layer can be chosen primarily for its magnetostrictive qualities, such as large permeability change versus stress.

Many variations in the embodiments of the present invention are contemplated as described herein in more detail. Other applications of the present invention will become apparent to those skilled in the art when the following description of the best mode contemplated for practicing the invention is read in conjunction with the accompanying drawings.

BRIEF DESCRIPTION OF THE DRAWINGS

The description herein makes reference to the accompanying drawings wherein like reference numerals refer to like parts throughout the several views.

Figure 1A depicts a prior art magnetostrictive sensor.

Figure 1B is a representation of the skin depth associated with the prior art magnetostrictive sensor, seen along line 1B-1B of Figure 1A.

Figure 2A depicts a sectional side view of a first preferred embodiment of a non-invasive magnetostrictive sensor according to the present invention.

Figure 2B depicts an example of a preferable source of magnetic flux of the first preferred embodiment of a non-invasive magnetostrictive sensor according to the present invention presented in Figure 2A.

Figure 2C depicts a top plan view of the first preferred embodiment of a non-invasive magnetostrictive sensor according to the present invention utilizing the source of magnetic flux example presented in Figure 2B.

Figures 2D and 2E are views similar to Figure 2B, showing other aspects of the first embodiment, wherein the magnetic flux penetration is differing.

Figure 3A depicts a sectional side view of a second preferred embodiment of a non-invasive magnetostrictive sensor according to the present invention.

Figure 3B depicts a sectional end view of the second preferred embodiment of a non-invasive magnetostrictive sensor according to the present invention seen along line 3B-3B of Figure 3A.

Figures 3C and 3D are views similar to Figure 3A, showing other aspects of the second embodiment, wherein the magnetic flux penetration is differing.

Figure 4 depicts a sectional side view of a third preferred embodiment of a non-invasive magnetostrictive sensor according to the present invention.

DESCRIPTION OF THE PREFERRED EMBODIMENT

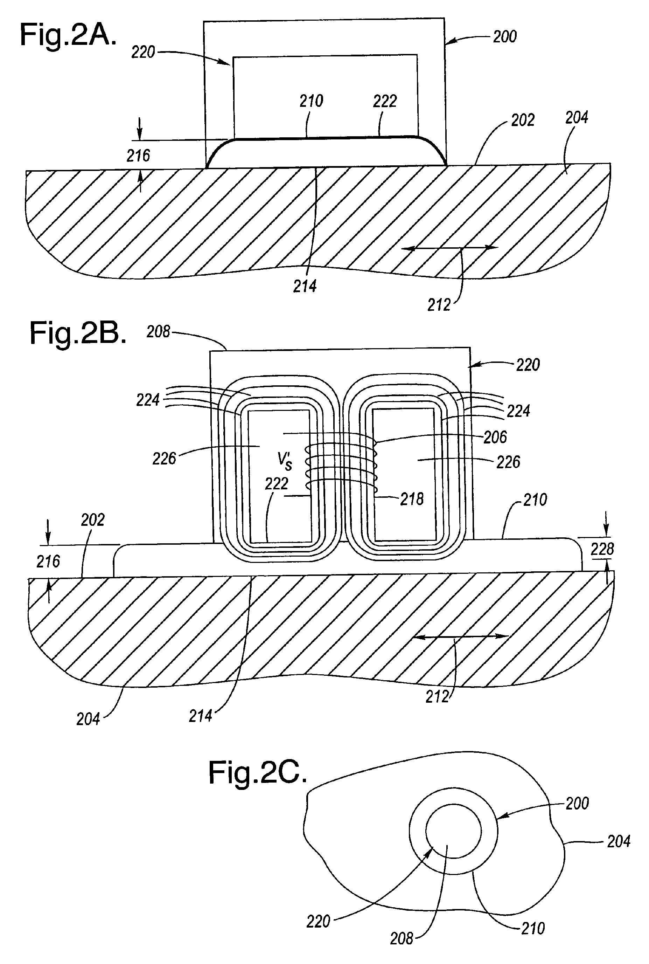

Referring now to the drawing, Figures 2A through 2E depict a first preferred embodiment of a non-invasive magnetostrictive sensor 200 according to the present invention to sense force or torque 212 applied to a structural element 204, which may be made of a conducting, or of a non-conducting, material. The magnetostrictive sensor 200 is non-invasively attached to plane surface 202 of the structural element to thereby provide an intimate contact with the structural element, whereby no air gap is present at the plane of contact interface 214 between the magnetostrictive sensor and the structural element.

Non-invasive magnetostrictive sensor 200 consists of magnetostrictive layer (by the term "layer" is also meant "coating") 210 of thickness 216 in intimate contact with a source of magnetic flux 220, whereby no air gap or as small of an air gap as possible is present at the contact interface 222 between the magnetostrictive layer and the source of magnetic flux. The source of magnetic flux 220 is constructed to effectively and efficiently guide the produced magnetic flux 224, depicted by way of example in Figure 2B, to the magnetostrictive layer 210 in order to maximize the magnetostrictive sensor response to strain.

Figure 2B depicts an example of a source of magnetic flux 220 which is, preferably, a typical conventional coil 206 mounted inside a core structure 208, preferably having a predetermined number N of turns wound around a center core member 218 occupying space 226 of the core structure, whose magnetic characteristics and operation are well known in the art. Although many shapes are possible, the core structure 208 will be preferably designed to orient the flux lines according to the direction of the strain, in order to maximize sensitivity. A parallelepiped shape may be desirable in that respect. An alternating current, preferably, sinusoidally alternating current, is applied to the coil to produce a time varying magnetic flux 224 within the core structure 208. The core structure 208 has a high magnetic permeability selected to guide the magnetic flux generated by the alternating current carrying coil 206 within the cylindrical core structure to the magnetostrictive layer 210 in order to maximize the magnetostrictive sensor response to strain.

Force or torque 212 is applied to the structural element 204 to which the magnetostrictive sensor 200 is fixedly attached, and thereby produces a stress within the structural element which is transferred to the magnetostrictive layer 210 of the magnetostrictive sensor due to its fixed, intimate contact with the structural element, and thereby varies the magnetic permeability of the magnetostrictive layer. As is known in the art, the varying magnetic permeability of the magnetostrictive layer 210 produces a change in the magnetic flux 224, thereby producing a change in the inductance and impedance of the coil 206 of magnetostrictive sensor 200, and thereby producing a change in the voltage $V'_s$ across the coil. Force 212 applied to structural element 204 and, thus, upon magnetostrictive sensor 200, can be determined by the produced change in inductance or impedance of the coil 206 via the change in the voltage $V'_S$ of the coil by techniques well known in the art.

Figure 2C depicts a top view of a first preferred embodiment of a non-invasive magnetostrictive sensor 200 according to the present invention utilizing the source of magnetic flux 220 as shown in Figure 2B.

The depth of penetration 228 of the magnetic flux 224 into the magnetostrictive layer 210 is a function of the thickness of the layer 216 with respect to the frequency of the, preferably, sinusoidal alternating current supplied to coil 206, the magnetic permeability $\mu_C$ of the magnetostrictive layer, the magnetic permeability $\mu_S$ of the structural element 204, the conductivity $\sigma_C$ of the magnetostrictive layer, and the conductivity $\sigma_S$ of the structural element, and can be referenced to the skin depth, as defined by equation (1), of the magnetostrictive layer and/or the skin depth of the structural element. The skin depth $\delta_C$ of the magnetostrictive layer 210 is given by:

$$\delta_C = 1/\sqrt{(\pi f \mu_C \sigma_C)} = (\pi f \mu_C \sigma_C)^{-\frac{1}{2}} \qquad (2)$$

where $\mu_C$ is the magnetic permeability of the magnetostrictive layer, $\sigma_C$ is the conductivity of the magnetostrictive layer, and f is the frequency of the current supplied to coil 206. The skin depth $\delta_S$ of the structural element 204 is given by:

$$\delta_S = 1/\sqrt{(\pi f \mu_S \sigma_S)} = (\pi f \mu_S \sigma_S)^{-\frac{1}{2}} \qquad (3)$$

where $\mu_S$ is the magnetic permeability of the structural element, $\sigma_S$ is the conductivity of the structural element, and f is the frequency of the current supplied to coil 206.

In a first aspect of the first preferred embodiment of the present invention as depicted at Figure 2B, the frequency of the alternating current supplied to coil 206, the magnetic permeability $\mu_C$ of the magnetostrictive layer 210, and the conductivity $\sigma_C$ of the magnetostrictive layer are such that the thickness 216 of the magnetostrictive layer is greater than the skin depth $\delta_C$ of the magnetostrictive layer. In this case, magnetic flux 224 is within magnetostrictive layer 210 having a depth of penetration 228 into the magnetostrictive layer less than the thickness 216 of the magnetostrictive layer.

In the first aspect of the first preferred embodiment of the present invention, the reactive part of the voltage of the coil 206 which varies in response to the magnetostriction in layer 210 can be shown to be a function of the square root of the product of the frequency of the current supplied to the coil and the magnetic permeability $\mu_C$ of the magne-

tostrictive layer 210. Force 212 applied to structural element 204 and, thus, upon the magnetostrictive sensor 200 can be determined by the produced change in inductance or impedance of the coil 206 via the change in the voltage $V'_s$ of the coil by techniques well known in the art.

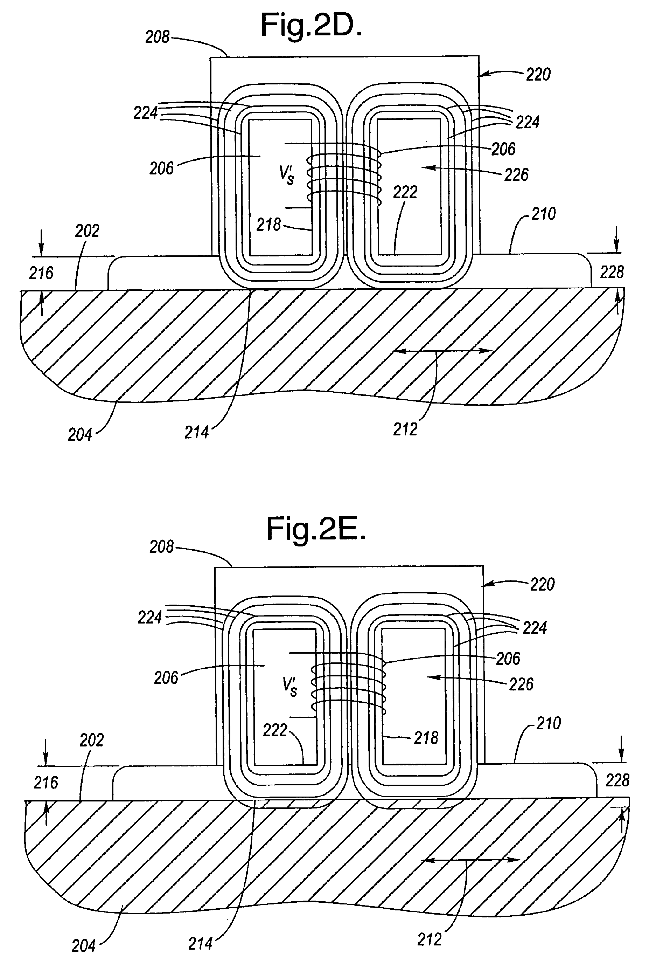

In a second aspect of the first preferred embodiment of the present invention as depicted at Figure 2D, the frequency of the current supplied to coil 206, the magnetic permeability $\mu_C$ of the magnetostrictive layer 210, and the conductivity $\sigma_C$ of the magnetostrictive layer are such that the thickness 216 of the magnetostrictive layer is approximately equal to or less than the skin depth $\delta_C$ of the magnetostrictive layer and the product of the magnetic permeability $\mu_S$ of the structural element 204 and the conductivity of the structural element $\sigma_S$ is greater than a magnitude of at least ten times the product of the magnetic permeability $\mu_C$ of the magnetostrictive layer and the conductivity $\sigma_C$ of the magnetostrictive layer. In this case, magnetic flux 224 is confined within the thickness 216 of magnetostrictive layer 210 and the depth of penetration 228 of the magnetic flux into the magnetostrictive layer is approximately equal to the thickness of the magnetostrictive layer, serving to increase the sensitivity of the magnetostrictive sensor 200.

As an example of the second aspect of the first preferred embodiment of the present invention, the material of the magnetostrictive layer 210 is a suitable nickel-iron alloy having a thickness 216 of 0.4 millimeters and the material of the structural element 204 is iron, the magnetic permeabilities and conductivities of both materials being well known in the art. For a sinusoidally varying current supplied to coil 206 having a frequency of 1 kHz, the skin depth of the nickel-iron magnetostrictive layer 210 is 0.44 millimeters. Under stress, the magnetic permeability of the stressed nickel-iron magnetostrictive layer 210 decreases resulting in an increase in the skin depth of the stressed nickel-iron magnetostrictive layer, whereas the skin depth of the stressed iron structural element 204 does not change, or changes negligibly compared to the nickel-iron layer. Iron is magnetostrictive, but it is much less so, by orders of magnitude, than suitable nickel-iron alloys. The much smaller skin depth of the stressed iron structural element 204 serves to confine the depth of penetration 228 of the magnetic flux 224 within the thickness 216 of the nickel-iron magnetostrictive layer 210 and is approximately equal to the thickness of the nickel-iron magnetostrictive layer of 0.4 millimeters. Thus, a thickness 216 of 0.4 millimeters of a nickel-iron magnetostrictive layer 210 applied to an iron structural element at a frequency of 1 kHz supplied to coil 206 results in a depth of penetration 228 of the magnetic flux 224 approximately equal to the thickness of the nickel-iron magnetostrictive layer.

In the second aspect of the first preferred embodiment of the present invention, the reactive part of the voltage $V'_s$ of the coil 206 which varies in response to the magnetostriction in layer 210 can be shown to be a function of the product of the frequency of the current supplied to the coil and the magnetic permeability $\mu_C$ of the magnetostrictive layer 210. Force 212 applied to structural element 204 and, thus, upon magnetostrictive sensor 200 can be determined by the produced change in inductance or impedance of the coil 206 via the change in the voltage $V'_s$ of the coil by techniques well known in the art.

In a third aspect of the first preferred embodiment of the present invention as depicted at Figure 2E, the frequency of the current supplied to coil 206, the magnetic permeability $\mu_C$ of the magnetostrictive layer 210, and the conductivity $\sigma_C$ of the magnetostrictive layer are such that the thickness 216 of the magnetostrictive layer is less than the skin depth $\delta_C$ of the magnetostrictive layer and the product of the magnetic permeability $\mu_S$ of the structural element 204 and the conductivity of the structural element $\sigma_S$ is not greater than a magnitude of at least about ten times the product of the magnetic permeability $\mu_C$ of the magnetostrictive layer and the conductivity $\sigma_C$ of the magnetostrictive layer. In this case, the depth of penetration 228 of the magnetic flux 224 exceeds the thickness 216 of the magnetostrictive layer 210 and extends into the structural element 204, whereby the magnetostrictive sensor 200 has a reduced sensitivity with respect to the second aspect of the first preferred embodiment of the present invention.

In the third aspect of the first preferred embodiment of the present invention, the reactive part of the voltage $V'_s$ of the coil 206 which varies in response to the magnetostriction in layer 210 can be shown to be a function of the product of the frequency of the current supplied to the coil and the magnetic permeability $\mu_C$ of the magnetostrictive layer 210. Force 212 applied to structural element 204 and, thus, upon magnetostrictive sensor 200 can be determined by the produced change in inductance or impedance of the coil 206 via the change in the voltage $V'_s$ of the coil by techniques well known in the art.

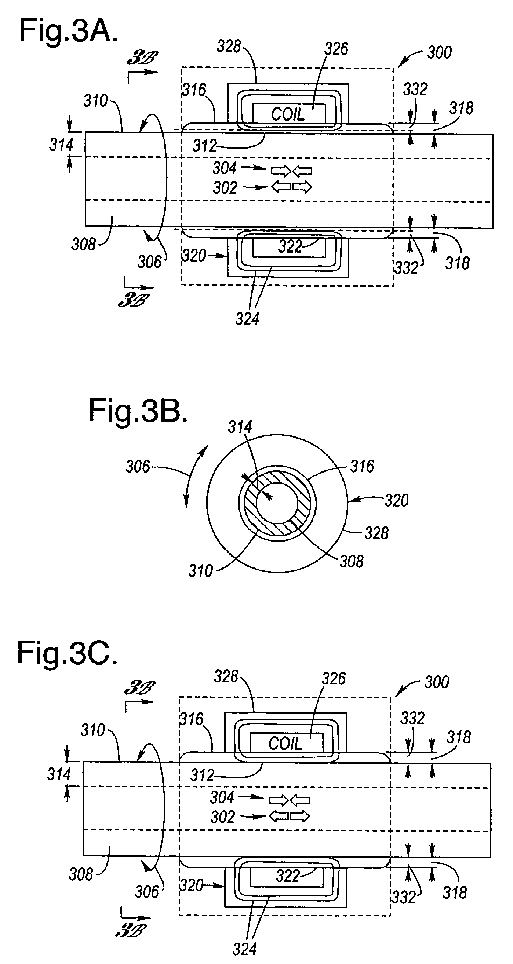

Figures 3A through 3D depict a second preferred embodiment of a non-invasive magnetostrictive sensor 300 according to the present invention to sense forces 302, 304 and torque 306 applied to structural element 308, in the form of a shaft or rod comprised of a material which may or may not be a conductor, to which the magnetostrictive sensor is non-invasively attached to the cylindrical surface 310 thereof to thereby provide fixed, intimate contact with the structural element, whereby no air gap is present at the contact interface 312 between the magnetostrictive sensor 300 and the structural element 308. In Figures 3A and 3B, the structural element 308 is depicted as being hollow with thickness 314, but the structural element may be alternatively solid.

The non-invasive magnetostrictive sensor 300 consists of magnetostrictive layer 316 of thickness 318 in intimate contact with a source of magnetic flux 320, whereby no air gap or as small of an air gap as possible is present at the contact interface 322 between the magnetostrictive layer and the source of magnetic flux, wherein the source of magnetic flux is constructed to effectively and efficiently guide the produced magnetic flux 324 to the magnetostrictive layer 316 in order to maximize the response of the magnetostrictive sensor 300 to strain.

The source of magnetic flux 320 is, preferably, a coil 326 mounted inside a cylindrical core structure 328 encircling the cylindrical surface 310 of the shaft or rod 308, preferably having a predetermined number N' of turns wound around the cylindrical surface of the shaft or rod, wherein the magnetic characteristics and operation thereof are well known in the art. An alternating current, preferably, a sinusoidally alternating current is applied to the coil 326 to produce a time varying magnetic flux 324 within the cylindrical core structure, whereby the cylindrical core structure has, as described hereinabove with respect to the first preferred embodiment, a high magnetic permeability selected to guide the magnetic flux generated by the current carrying coil within the cylindrical core structure to the magnetostrictive layer 316 in order to maximize the magnetostrictive sensor response to strain.

Force 302, 304 or torque 306 applied to structural element 308 to which the magnetostrictive sensor 300 is attached produces a stress within the structural element which is transferred to the magnetostrictive layer 316 of the magnetostrictive sensor due to its fixed, intimate contact with the structural element, thereby varying the magnetic permeability of the magnetostrictive layer. As is known in the art, the varying magnetic permeability of the magnetostrictive layer 316 produces a change in the magnetic flux 324, thereby producing a change in the inductance and impedance of the coil 326 of magnetostrictive sensor 300, which can be captured as a change in the voltage across the coil (analogous to $V'_S$ as depicted in the first preferred embodiment). Force 302, 304 or torque 306 applied to structural element 308 and, thus, upon magnetostrictive sensor 300 can be determined by the produced change in inductance or impedance of the coil 326 via the change in the voltage of the coil by techniques well known in the art.

Figure 3B depicts a side view of the second preferred embodiment of a non-invasive magnetostrictive sensor 300 according to the present invention as shown in Figure 3A.

The depth of penetration 332 of the magnetic flux 324 into the magnetostrictive layer 316 is a function of the thickness of the layer 318 with respect to the frequency of the, preferably, sinusoidal current supplied to coil 326, the magnetic permeability $\mu_{CC}$ of the magnetostrictive layer, the magnetic permeability $\mu_{SH}$ of the structural element 308, the conductivity $\sigma_{CC}$ of the magnetostrictive layer, and the conductivity $\sigma_{SH}$ of the structural element and can be referenced to the skin depth, given by equation (1), of the magnetostrictive layer and/or the skin depth of the structural element. The skin depth $\delta_{CC}$ of the magnetostrictive layer 316 is given by:

$$\delta_{CC} = 1/\sqrt{(\pi f \mu_{CC} \sigma_{CC})} = (\pi f \mu_{CC} \sigma_{CC})^{-\frac{1}{2}} \qquad (4)$$

where $\mu_{CC}$ is the magnetic permeability of the magnetostrictive layer, $\sigma_{CC}$ is the conductivity of the magnetostrictive layer, and f is the frequency of the current supplied to coil 326. The skin depth $\delta_{SH}$ of the structural element 308 is given by:

$$\delta_{SH} = 1/\sqrt{(\pi f \mu_{SH} \sigma_{SH})} = (\pi f \mu_{SH} \sigma_{SH})^{-\frac{1}{2}} \qquad (5)$$

where $\mu_{SH}$ is the magnetic permeability of the structural element, $\sigma_{SH}$ is the conductivity of the structural element, and f is the frequency of the current supplied to coil 326.

In a first aspect of the second preferred embodiment of the present invention depicted at Figure 3A, the frequency of the current supplied to coil 326, the magnetic permeability $\mu_{CC}$ of the magnetostrictive layer 316, and the conductivity $\sigma_{CC}$ of the magnetostrictive layer are such that the thickness 318 of the magnetostrictive layer is greater than the skin depth $\delta_{CC}$ of the magnetostrictive layer. In this case, magnetic flux 324 is within magnetostrictive layer 316 having a depth of penetration 332 into the magnetostrictive layer 316 less than the thickness 318 of the magnetostrictive layer.

In the first aspect of the second preferred embodiment of the present invention, the reactive part of the voltage of the coil 206 which varies in response to the magnetostriction in layer 210 can be shown to be a function of the square root of the product of the frequency of the current supplied to the coil and the magnetic permeability $\mu_{CC}$ of the magnetostrictive layer 316. Force 302, 304 and torque 306 applied to structural element 308 and, thus, upon magnetostrictive sensor 300 can be determined by the produced change in inductance or impedance of the coil 326 via the change in the voltage of the coil by techniques well known in the art.

In a second aspect of the second preferred embodiment of the present invention depicted at Figure 3C, the frequency of the current supplied to coil 326, the magnetic permeability $\mu_{CC}$ of the magnetostrictive layer 316, and the conductivity $\sigma_{CC}$ of the magnetostrictive layer are such that the thickness 318 of the magnetostrictive layer is approximately equal to or is less than the skin depth $\delta_{CC}$ of the magnetostrictive layer and the product of the magnetic permeability $\mu_{SH}$ of the structural element 308 and the conductivity of the structural element $\sigma_{SH}$ is greater than a magnitude of at least about ten times the product of the magnetic permeability $\mu_{CC}$ of the magnetostrictive layer and the conductivity $\sigma_{CC}$ of the magnetostrictive layer. In this case, magnetic flux 324 is confined within the thickness 318 of magnetostrictive layer 316 and the depth of penetration 332 of the magnetic flux into the magnetostrictive layer is approximately equal to the thickness of the magnetostrictive layer serving to increase the sensitivity of the magnetostrictive sensor 300.

The example described herein above with respect to the second aspect of the first preferred embodiment of the present invention utilizing nickel-iron as the material of magnetostrictive layer 210 and iron as the material of structural element 204 may be analogously applied to the second aspect of the second preferred embodiment of the present invention.

In the second aspect of the second preferred embodiment of the present invention depicted at Figure 3C, the reactive part of the voltage of the coil 326 which varies in response to the magnetostriction in layer 316 can be shown to be a function of the product of the frequency of the current supplied to the coil and the magnetic permeability $\mu_{CC}$ of the magnetostrictive layer 316. Force 302, 304 and torque 306 applied to structural element 308 and, thus, upon magnetostrictive sensor 300 can be determined by the produced change in inductance or impedance of the coil 326 via the change in the voltage of the coil by techniques well known in the art.

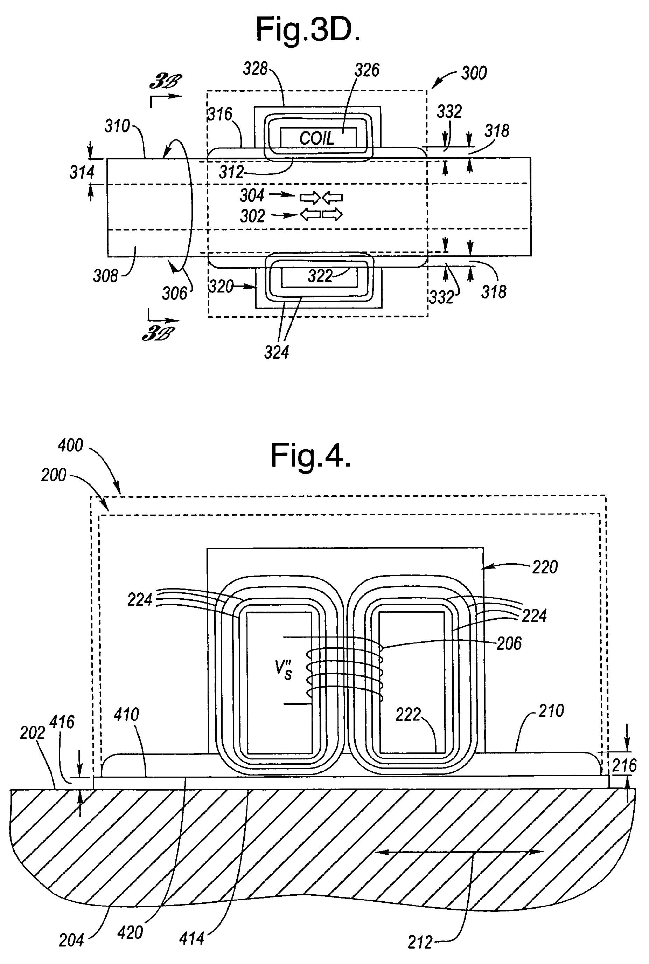

In a third aspect of the second preferred embodiment of the present invention depicted at Figure 3D, the frequency of the current supplied to coil 326, the magnetic permeability $\mu_{CC}$ of the magnetostrictive layer 316, and the conductivity $\sigma_{CC}$ of the magnetostrictive layer are such that the thickness 318 of the magnetostrictive layer is less than the skin depth $\delta_{CC}$ of the magnetostrictive layer and the product of the magnetic permeability $\mu_{SH}$ of the structural element 308 and the conductivity of the structural element $\sigma_{SH}$ is not greater than a magnitude of at least about ten times the product of the magnetic permeability $\mu_{CC}$ of the magnetostrictive layer and the conductivity $\sigma_{CC}$ of the magnetostrictive layer. In this case, the depth of penetration 332 of the magnetic flux 324 exceeds the thickness 318 of the magnetostrictive layer 316 and extends into the structural element 308, whereby the magnetostrictive sensor 300 has a reduced sensitivity with respect to the second aspect of the second preferred embodiment of the present invention.

In the third aspect of the second preferred embodiment of the present invention, the reactive part of the voltage of the coil 326 which varies in response to the magnetostriction in layer 316 can be shown to be a function of the product of the frequency of the current supplied to the coil and the magnetic permeability $\mu_{CC}$ of the magnetostrictive layer 316. Force 302, 304, and torque 306 applied to structural element 308 and, thus, upon magnetostrictive sensor 300 can be determined by the produced change in inductance or impedance of the coil 326 via the change in the voltage of the coil by techniques well known in the art.

Figure 4 depicts a third preferred embodiment of a non-invasive magnetostrictive sensor 400 according to the present invention to sense force or torque 212 applied to structural element 204 to which the magnetostrictive sensor is non-invasively attached to a surface 202 (for example, planar or cylindrical) of the structural element thereby providing fixed, intimate contact with the structural element, whereby no air gap is present at the contact interface 414 between the magnetostrictive sensor and the structural element.

The non-invasive magnetostrictive sensor 400 consists of magnetostrictive sensor 200 or 300 depicted in Figures 2A through 3D in fixed intimate contact with a conductive layer 410 of thickness 416, whereby no air gap is present at the contact interface 420 between the magnetostrictive layer 210 and the conductive layer. By example, a magnetostrictive sensor 200, having a source of magnetic flux 220 and coil 206, is depicted in Figure 4, wherein no air gap or as small of an air gap as possible is present at the contact interface 222 between the magnetostrictive layer and the source of magnetic flux.. The operation of magnetostrictive sensor 400 utilizing magnetostrictive sensor 300 would be analogous to that described hereinabove.

A force 212 applied to structural element 204 to which the magnetostrictive sensor 400 is attached produces a stress within the structural element which is transferred to magnetostrictive layer 210 of the magnetostrictive sensor, via the conductive layer 410, due to its fixed intimate contact with the conductive layer, thereby varying the magnetic permeability of the magnetostrictive layer. As is known in the art, the varying magnetic permeability of the magnetostrictive layer 210 produces a change in the magnetic flux 224, thereby producing a change in the inductance and impedance of the coil 206 of magnetostrictive sensor 200, and thereby producing a change in the voltage $V''_S$ across the coil. Force 212 applied to structural element 204 and, thus, upon magnetostrictive sensor 400 can be determined by the produced change in inductance or impedance of the coil 206 via the change in the voltage $V''_S$ of the coil by techniques well known in the art.

The depth of penetration of the magnetic flux 224 into the magnetostrictive layer 210 is a function of the thickness of the layer 216 with respect to the frequency of the, preferably, sinusoidally alternating current supplied to coil 206, the magnetic permeability $\mu_C$ of the magnetostrictive layer, the magnetic permeability $\mu_{CN}$ of the conductive layer 410, the conductivity $\sigma_C$ of the magnetostrictive layer, and the conductivity $\sigma_{CN}$ of the conductive layer and can be referenced to the skin depth, given by equation (1), of the magnetostrictive layer and/or the skin depth of the conductive layer. The skin depth $\delta_C$ of the magnetostrictive layer 210 is given by equation (2), where now $\mu_C$ is the magnetic permeability of the magnetostrictive layer, $\sigma_C$ is the conductivity of the magnetostrictive layer, and f is the frequency of the current supplied to coil 206. The skin depth $\delta_{CN}$ of the conductive layer 410 is given by:

$$\delta_{CN} = 1/\sqrt{(\pi f \mu_{CN} \sigma_{CN})} = (\pi f \mu_{CN} \sigma_{CN})^{-\frac{1}{2}} \qquad (6)$$

where $\mu_{CN}$ is the magnetic permeability of the conductive layer, $\sigma_{CN}$ is the conductivity of the conductive layer, and f is the frequency of the current supplied to coil 206.

In the third preferred embodiment of the present invention, the frequency of the current supplied to coil 206, the magnetic permeability $\mu_C$ of the magnetostrictive layer 210, and the conductivity $\sigma_C$ of the magnetostrictive layer are such that the thickness 216 of the magnetostrictive layer is less than the skin depth $\delta_C$ of the magnetostrictive layer, whereas the frequency of the alternating current supplied to coil, the magnetic permeability $\mu_{CN}$ of the conductive layer 410, and the conductivity $\sigma_{CN}$ of the conductive layer are such that the thickness 416 of the conductive layer is approximately equal to or larger than the skin depth $\delta_{CN}$ of the conductive layer and the product of the magnetic permeability $\mu_{CN}$ of the conductive layer and the conductivity $\sigma_{CN}$ of the conductive layer is greater than a magnitude of at least about ten times the product of the magnetic permeability $\mu_C$ of the magnetostrictive layer and the conductivity $\sigma_C$ of the magnetostrictive layer. In this case, magnetic flux 224 is confined within the thickness 216 of magnetostrictive layer 210 and the depth of penetration of the magnetic flux into the magnetostrictive layer is approximately equal to the thickness of the magnetostrictive layer serving to increase the sensitivity of the magnetostrictive sensor 400. The reactive part of the voltage $V''_S$ of the coil 206 which varies in response to the magnetostriction in layer 210 can be shown to be a function of the product of the frequency of the current supplied to the coil and the magnetic permeability $\mu_C$ of the magnetostrictive layer 210. Force 212 applied to structural element 204 and, thus, upon magnetostrictive sensor 200 can be determined by the produced change in inductance or impedance of the coil 206 via the change in the voltage $V''_S$ of the coil by techniques well known in the art.

The non-invasiveness of the proposed sensor can be further appreciated by considering that with the present invention, the structural element material can be chosen to a large degree independently of the magnetostrictive sensor. For instance, if large stress levels are expected, a material with high yield strength such as steel can be chosen for the structural element, and the magnetostrictive layer can be chosen primarily for its magnetostrictive qualities, such as large permeability change versus stress.

It is to be understood that forces 212, 302, and 304 and torque 306 applied to structural elements 204, 308 impose stresses upon the structural elements and, in particular, surface stresses upon the structural elements. The surface stresses imposed upon the surfaces 202, 310 of the structural elements 204, 308 in Figures 2A-2E and 3A-3C result in surface strains upon the structural elements which are transferred to the magnetostrictive layers 210, 316 due to their fixed, intimate contact with the structural elements, thereby varying the magnetic permeabilities of the magnetostrictive layers by which the forces and torque applied to the structural elements can be determined as previously described. The surface stress imposed upon the surface 202 of the structural element 204 in Figure 4 results in a surface strain upon the conductive layer 420 which is transferred to the magnetostrictive layer 210 due to its fixed, intimate contact with the conductive layer, thereby varying the magnetic permeability of the magnetostrictive layer by which the forces and torque applied to the structural element can be determined as previously described. As such, the present invention is, in this sense, a magnetostrictive sensor to sense strain imposed upon a structural element as previously described.

It is, also, to be understood that the terms "force and "torque" are applicable to, and inclusive of, all causes of stress, including for example pressure, vacuum, impact, acceleration, deceleration, and are, as such, within the scope of the present invention.

To those skilled in the art to which this invention appertains, the above described preferred embodiment may be subject to change or modification. Such change or modification can be carried out without departing from the scope of the invention, which is intended to be limited only by the scope of the appended claims.

## Claims

1.  A magnetostrictive sensor (200) for sensing strain in a structural element (204), said sensor comprising:

    a source of magnetic flux (220) providing magnetic flux (224), said source of magnetic flux comprising a coil (206) carrying a time varying current, said coil having an impedance; and
    a magnetostrictive layer (210) in intimate contact with said source of magnetic flux, wherein said magnetic flux passes through said magnetostrictive layer;
    wherein when said magnetostrictive layer is placed in fixed, intimate contact with a surface of the structural element, and the strain is applied to the structural element, then said magnetostrictive layer undergoes a change in permeability, wherein said impedance changes in response to said change in permeability.

**2.** The magnetostrcitive sensor of Claim 1,wherein the strain comprises a measure of at least one of a force and a torque applied to said structural element.

**3.** The magnetostrictive sensor of Claim 1, further comprising a conductive layer (410) in fixed, intimate contact (420) with said magnetostrictive layer;
wherein when said conductive layer is placed in fixed, intimate contact with a surface (414) of the structural element (204), and at least one of the force and the torque is applied to the structural element, then said magnetostrictive layer undergoes a change in permeability, wherein said impedance changes in response to said change in permeability.

**4.** The magnetostrcitive sensor of Claim 3,wherein the strain comprises a measure of at least one of a force and a torque applied to said structural element.

**5.** A magnetosrtrictive sensor and structural element combination, comprising:

a magnetostrictive sensor (200), comprising:

a source of magnetic flux (220) providing magnetic flux (224), said source of magnetic flux comprising a coil (206) carrying a time varying current, said coil having an impedance;
a magnetostrictive layer (210) in intimate contact (222) with said source of magnetic flux, wherein said magnetic flux passes through said magnetostrictive layer; and
a structural element (204) having a surface (202);
wherein said magnetostrictive layer is in fixed, intimate contact (214) with said surface of said structural element; and
wherein when at least one of a force (212) and a torque (306) is applied to the structural element, said magnetostrictive layer undergoes a change in permeability, wherein said impedance changes in response to said change in permeability.

**6.** The combination of Claim 5, wherein said surface comprises one of a planar surface and a cylindrical surface.

**7.** The combination of claim 6, wherein said surface comprises said cylindrical surface, wherein said magnetostrictive sensor encircles said cylindrical surface.

**8.** The combination of Claim 5, wherein frequency of said time varying current, a magnetic permeability of said magnetostrictive layer (210), and a conductivity of said magnetostrictive layer are such that a thickness of said magnetostrictive layer (216) is greater than a skin depth of said magnetostrictive layer, whereupon said magnetic flux is within said magnetostrictive layer and has a depth of penetration (228) into said magnetostrictive layer less than the thickness of the magnetostrictive layer.

**9.** The combination of Claim 8, wherein said surface comprises one of a planar surface and a cylindrical surface.

**10.** The combination of claim 9, wherein said surface comprises said cylindrical surface, wherein said magnetostrictive sensor encircles said cylindrical surface.

**11.** The combination of Claim 5, wherein frequency of said time varying current, a magnetic permeability of said magnetostrictive layer (210), and a conductivity of said magnetostrictive layer are such that a thickness of said magnetostrictive layer (216) is at most approximately equal to a skin depth of said magnetostrictive layer, and the product of a magnetic permeability of said structural element and a conductivity of the structural element is greater by a magnitude of substantially at least about ten times a product of the magnetic permeability of the magnetostrictive layer and the conductivity of the magnetostrictive layer, whereupon said magnetic flux is within said magnetostrictive layer and has a depth of penetration (228) into said magnetostrictive layer approximately equal to the thickness of the magnetostrictive layer.

**12.** The combination of Claim 11, wherein said surface comprises one of a planar surface and a cylindrical surface.

**13.** The combination of claim 12, wherein said surface comprises said cylindrical surface, wherein said magnetostrictive sensor encircles said cylindrical surface.

**14.** The combination of Claim 5, wherein frequency of said time varying current, a magnetic permeability of said magnetostrictive layer (210), and a conductivity of said magnetostrictive layer are such that a thickness of said magnetostrictive layer (216) is less than a skin depth of said magnetostrictive layer, and the product of a magnetic permeability of said structural element and a conductivity of the structural element is not greater by a magnitude of substantially at least about ten times a product of the magnetic permeability of the magnetostrictive layer and the conductivity of the magnetostrictive layer, whereupon said magnetic flux is within said magnetostrictive layer and has a depth of penetration (228) exceeding said magnetostrictive layer and extends into said structural element.

**15.** The combination of Claim 14, wherein said surface comprises one of a planar surface and a cylindrical surface.

**16.** The combination of claim 15, wherein said surface comprises said cylindrical surface, wherein said magnetostrictive sensor encircles said cylindrical surface.

**17.** A magnetosrtriction sensor and structural element combination, comprising:

a magnetostrictive sensor (400) comprising:

a source of magnetic flux (220) providing magnetic flux (224), said source of magnetic flux comprising a coil (206) carrying a time varying current, said coil having an impedance;
a magnetostrictive layer (210) in intimate contact (222) with said source of magnetic flux, wherein said magnetic flux passes through said magnetostrictive layer; and
a conductive layer (410) in fixed, intimate contact (420) with said magnetostrictive layer; and
a structural element (204) having a surface (202);
wherein said conductive layer is in fixed, intimate contact (420) with said surface of said structural element; and
wherein when at least one of a force (212) and a torque (306) is applied to the structural element, said magnetostrictive layer undergoes a change in permeability, wherein said impedance changes in response to said change in permeability, and said voltage changes in response to change in said inductance.

**18.** The combination of Claim 17, wherein frequency of said time varying current, a magnetic permeability of said magnetostrictive layer, and a conductivity of said magnetostrictive layer (216) are such that a thickness of said magnetostrictive layer (416) is less than a skin depth of said magnetostrictive layer, wherein the frequency of the time varying current, a magnetic permeability of the conductive layer, and a conductivity of the conductive layer are such that a thickness of the conductive layer is at least approximately equal to a skin depth of the conductive layer, whereupon said magnetic flux is confined within the thickness of said magnetostrictive layer and the depth of penetration of the magnetic flux into the magnetostrictive layer is approximately equal to the thickness of said magnetostrictive layer.

**19.** The combination of Claim 18, wherein said surface comprises one of a planar surface and a cylindrical surface.

**20.** The combination of claim 19, wherein said surface comprises said cylindrical surface, wherein said magnetostrictive sensor encircles said cylindrical surface.

# Fig.1A.
## *Prior Art*

# Fig.1B.
## *Prior Art*

Fig.2A.

Fig.2B.

Fig.2C.

# Fig.2D.

# Fig.2E.

# Fig.3A.

# Fig.3B.

# Fig.3C.

# Fig.3D.

# Fig.4.